# FASCICULE DE BREVET EUROPEEN

(11) **EP 3 729 466 B1**
(45) Date de publication et mention de la délivrance du brevet: **26.07.2023**
(21) Numéro de dépôt: 18816160.8
(22) Date de dépôt: 18.12.2018
(51) Int. Cl.: G21D 3/00, G21C 3/04

(54) **PROCÉDÉ DE DÉTERMINATION D'AU MOINS UNE VALEUR LIMITE D'AU MOINS UN PARAMÈTRE DE FONCTIONNEMENT D'UN RÉACTEUR NUCLÉAIRE, PROGRAMME D'ORDINATEUR ET SYSTÈME ÉLECTRONIQUE ASSOCIÉS**
VERFAHREN ZUR BESTIMMUNG MINDESTENS EINES SCHWELLWERTS VON MINDESTENS EINEM BETRIEBSPARAMETER EINES KERNREAKTORS SOWIE ZUGEHÖRIGES COMPUTERPROGRAMM UND ELEKTRONISCHES SYSTEM
METHOD FOR DETERMINING AT LEAST ONE THRESHOLD VALUE OF AT LEAST ONE OPERATING PARAMETER OF A NUCLEAR REACTOR, AND ASSOCIATED COMPUTER PROGRAM AND ELECTRONIC SYSTEM

(30) Priorité: 18.12.2017 FR 1762391
(43) Date de publication de la demande: 28.10.2020
(73) Titulaire: Framatome, 92400 Courbevoie (FR)
(72) Inventeur: ANDRE POYAUD, Gilles, 69005 LYON (FR)
(74) Mandataire: Lavoix
(86) Numéro de dépôt international: PCT/EP2018/085662
(87) Numéro de publication internationale: WO 2019/121791

(56) Documents cités:
- EP-B1- 1 556 870
- US-A- 5 091 139
- US-A1- 2009 080 585
- Vincent Bessiron: "AREVA's PCI methodologies for PWR enhanced plant maneuverability", , 1 janvier 2014 (2014-01-01), XP055489395, Extrait de l'Internet: URL:https://inis.iaea.org/search/search.as px?orig_q=RN:47079965 [extrait le 2018-07-02]
- Daniel Lucile ET AL: "AREVA NP's PCI methodologies for PWR enhanced plant maneuverability", , 1 January 2016 (2016-01-01), pages 1-10, XP055798279, Retrieved from the Internet: URL:-

## Description

La présente invention concerne un procédé de détermination d'au moins une valeur limite d'au moins un paramètre de fonctionnement d'un réacteur nucléaire.

Le réacteur nucléaire comprend un coeur dans lequel des assemblages de combustible sont chargés, les assemblages de combustible comprenant des crayons de combustible comportant chacun des pastilles de combustible nucléaire et une gaine entourant les pastilles.

La présente invention concerne également un système électronique de détermination associé, et un programme d'ordinateur comportant des instructions logicielles qui, lorsqu'elles sont exécutées par un ordinateur, mettent en oeuvre un tel procédé.

L'invention s'applique, par exemple, aux réacteurs nucléaires à eau légère qu'ils soient à eau pressurisée ou à eau bouillante.

Un grand nombre de ces réacteurs sont actuellement exploités dans le monde.

Il peut être utile, notamment dans des pays comme la France où plus de 50% de l'électricité est produite par des réacteurs nucléaires, que la puissance globale fournie par ces réacteurs varie afin de s'adapter aux besoins du réseau électrique qu'ils alimentent.

En particulier, il est souhaitable de pouvoir faire fonctionner les réacteurs nucléaires à une puissance intermédiaire pendant une période prolongée au cours de laquelle la demande du réseau est faible, typiquement de quelques jours à moins de 2 mois, avant de revenir à la puissance nominale. La puissance de fonctionnement est considérée comme une puissance intermédiaire dès lors qu'elle est inférieure à 92% de la puissance nominale.

Le document US 5 091 139 A décrit un procédé de sécurité pour bloquer des requêtes d'augmentation de la puissance du coeur en temps réel.

Le document EP 1 556 870 B1 décrit la méthodologie MIR, pour Méthodologie IPG Rénovée, pour calculer une marge IPG.

Le document US 2009/080585 A1 un procédé de détermination d'une trajectoire de puissance linéique.

L'article « AREVA's PCI méthodologies for PWR enhanced plant maneuverability » de Vincent Bessiron décrit un procédé de détermination de valeurs limites d'au moins un paramètre de fonctionnement d'un réacteur nucléaire, associées à des seuils de protection.

L'article "AREVA NP's PCI methodologies for PWR enhanced plant maneuverability" de L. Daniel et al, publié fin juin 2016, décrit un procédé de détermination de valeurs limites d'au moins un paramètre de fonctionnement d'un réacteur nucléaire, ces valeurs limites étant associées à des seuils de protection. Ce procédé comprend la détermination d'un premier seuil de protection correspondant à une première valeur limite du paramètre de fonctionnement respectif, pour un fonctionnement à une première puissance du réacteur, telle que la puissance nominale.

En vue d'un fonctionnement prolongé à puissance intermédiaire (FPPI) du réacteur, le procédé comprend également la détermination d'un deuxième seuil de protection correspondant à une deuxième valeur limite du paramètre de fonctionnement respectif, pour un fonctionnement à une deuxième puissance du réacteur, telle que la puissance intermédiaire associée au FPPI, c'est-à-dire une puissance plus faible que la puissance nominale, généralement exprimée sous forme d'un pourcentage de la puissance nominale, typiquement entre 10% et 92% de la puissance nominale.

Chaque seuil de protection, ou valeur limite associée du paramètre de fonctionnement respectif, et en particulier la deuxième valeur limite dudit paramètre de fonctionnement, associée dans cet exemple au FPPI, est déterminé via le calcul d'une marge IPG (Interaction Pastille-Gaine), de sorte que la marge IPG reste positive malgré cette modification de la puissance du réacteur.

Dans certains cas, il peut être nécessaire de faire fonctionner un réacteur sur de très longues périodes à faible puissance (FPPI extra-long), par exemple suite à une indisponibilité d'équipement ou à une fuite sur le circuit secondaire du récteur nucléaire, et de manière générale suite à tout événement conduisant à moins bien évacuer la chaleur et donc à devoir baisser la puissance du réacteur nucléaire.

L'objectif est d'exploiter le réacteur au mieux de ses capacités en poursuivant son fonctionnement à une puissance la plus élevée possible.

Pour autant, une telle exploitation d'un réacteur nucléaire ne doit pas induire de problème de sûreté, notamment en cas de transitoire de fonctionnement accidentel pouvant intervenir par exemple pendant le FPPI, ou peu de temps après un retour en puissance succédant à un fonctionnement prolongé à puissance intermédiaire.

Un but de l'invention est de résoudre ce problème en fournissant un procédé de détermination d'au moins une valeur limite d'au moins un paramètre de fonctionnement d'un réacteur nucléaire, permettant de mieux exploiter les capacités du réacteur, tout en conservant un fonctionnement sûr.

A cet effet, l'invention a pour objet un procédé selon la revendication 1.

Le procédé de détermination selon l'invention permet alors de déterminer la valeur limite du paramètre de fonctionnement pour au moins un palier de puissance entre la première puissance et la deuxième puissance. Chaque valeur limite déterminée du paramètre de fonctionnement est associée à un seuil de protection, chaque valeur limite correspondant en effet à un seuil à ne pas dépasser afin d'assurer la protection du réacteur nucléaire, c'est-à-dire sa sûreté de fonctionnement.

Le fait de calculer au moins un tel palier de puissance avec détermination de la valeur limite associée du paramètre de fonctionnement et du seuil de protection associé, permet alors de mieux exploiter les capacités du réacteur.

En effet, un tel palier de puissance permet d'améliorer la gestion de la variation de la puissance avec une plus grande marge de sécurité et/ou une durée plus importante de fonctionnement possible en FPPI, que ce soit lors d'une diminution de la puissance, de la puissance nominale jusqu'à la plus faible puissance associée au FPPI, c'est-à-dire en mode de déconditionnement thermomécanique des crayons de combustible, ou encore lors d'une remontée de la puissance, de la plus faible puissance associée au FPPI jusqu'à la puissance nominale, c'est-à-dire en mode de reconditionnement thermomécanique des crayons de combustible.

Chaque valeur limite du paramètre de fonctionnement respectif, associée à un seuil de protection, est par exemple déterminée via le calcul de la marge IPG, de telle sorte que la marge IPG reste positive malgré une modification de la puissance du réacteur.

Suivant d'autres aspects avantageux de l'invention, le procédé de détermination est selon l'une quelconque des revendications 2 à 8.

Selon un aspect avantageux optionnel, chaque valeur limite du paramètre de fonctionnement respectif est une valeur limite associée à un seuil de protection conduisant au déclenchement d'un arrêt d'urgence du réacteur et/ou d'une alarme.

L'invention a également pour objet un programme d'ordinateur selon la revendication 9.

L'invention a également pour objet un système électronique selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une vue schématique illustrant un réacteur nucléaire à eau pressurisée ;
- la figure 2 est une vue schématique latérale d'un assemblage de combustible du coeur du réacteur de la figure 1 ;
- la figure 3 est une vue schématique en coupe longitudinale d'un crayon de combustible de l'assemblage de la figure 2 ;
- la figure 4 est un schéma bloc d'un système électronique de détermination d'au moins une valeur limite d'au moins un paramètre de fonctionnement du réacteur de la figure 1 ;
- la figure 5 est un organigramme du procédé de détermination d'au moins une valeur limite d'au moins un paramètre de fonctionnement du réacteur nucléaire, mis en oeuvre par le système électronique de la figure 4 ;
- la figure 6 est une courbe illustrant la simulation d'une rampe de puissance pour déterminer une puissance à rupture pour calculer la marge IPG selon un exemple de réalisation ; et
- les figures 7 à 9 représentent chacune un ensemble de courbes schématiques d'évolution, en fonction du temps écoulé depuis le passage en fonctionnement prolongé à puissance intermédiaire, de la puissance, de la marge IPG et du seuil de protection pour différents exemples de déconditionnement et/ou reconditionnement thermomécanique de crayons de combustible.

Dans la suite de la description, l'expression « sensiblement égal(e) à » définit une relation d'égalité à plus ou moins 1 0%, de préférence à plus ou moins 5%.

Dans la suite de la description, le terme « durée » définit de manière générale une période de temps, ou période temporelle, entre deux instants temporels, dont la valeur correspond alors à la différence entre ces deux instants temporels.

Ainsi, une durée correspondant à un instant temporel (final) T_{f} décompté à partir d'un instant initial Tᵢ, correspondra à la différence entre ces deux instants temporels Tᵢ, T_{f}, c'est-à-dire T_{f} - Tᵢ, et sera également notée de cette manière.

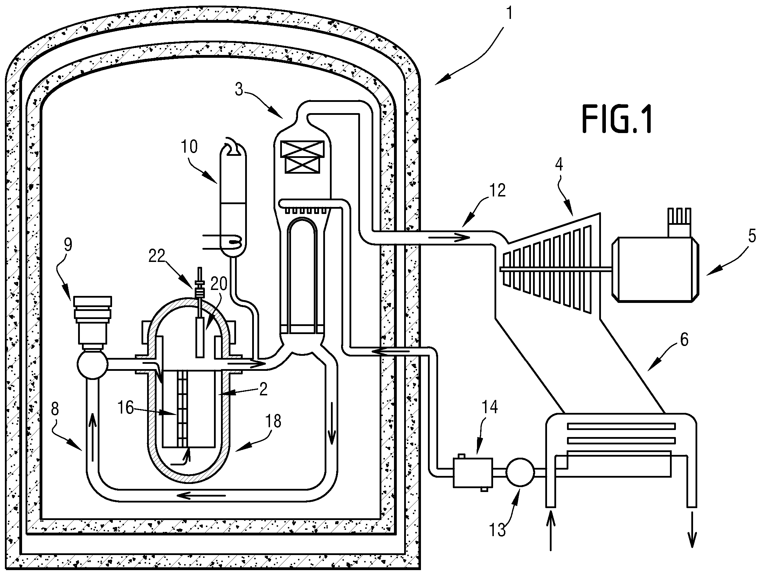

Sur la figure 1, un réacteur nucléaire 1, tel qu'un réacteur nucléaire à eau pressurisée, comprend comme connu en soi un coeur 2, un générateur de vapeur 3, une turbine 4 couplée à un générateur 5 d'énergie électrique, et un condenseur 6.

Le réacteur nucléaire 1 comprend un circuit primaire 8 équipé d'une pompe 9 et dans lequel circule de l'eau sous pression, selon le trajet matérialisé par les flèches sur la figure 1. Cette eau remonte notamment au travers du coeur 2 pour y être réchauffée en assurant la réfrigération du coeur 2.

Le circuit primaire 8 comprend en outre un pressuriseur 10 permettant de mettre sous pression l'eau circulant dans le circuit primaire 8.

L'eau du circuit primaire 8 alimente également le générateur de vapeur 3 où elle est refroidie en assurant la vaporisation d'eau circulant dans un circuit secondaire 12.

La vapeur produite par le générateur de vapeur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend, en aval du condenseur 6, une pompe 13 et un réchauffeur 14.

De manière classique, le coeur 2 comprend des assemblages de combustible 16 qui sont chargés dans une cuve 18 suivant un plan de chargement. Un seul assemblage de combustible 16 est représenté sur la figure 1, mais le coeur 2 comprend par exemple 157 assemblages de combustible 16.

Le réacteur nucléaire 1 comprend des grappes de commande 20 qui sont disposées dans la cuve 18 au-dessus de certains assemblages de combustible 16. Une seule grappe de commande 20 est représentée sur la figure 1, mais le coeur 2 comprend par exemple une soixantaine de grappes de commande 20.

Les grappes de commande 20 sont déplaçables par des mécanismes 22 pour venir s'insérer dans les assemblages de combustible 16 qu'elles surplombent.

Classiquement, chaque grappe de commande 20 comprend des crayons dont au moins certains comportent un matériau absorbant les neutrons.

Ainsi, le déplacement vertical de chaque grappe de commande 20 permet de régler la réactivité du réacteur nucléaire 1 et autorise des variations de la puissance globale P fournie par le coeur 2 depuis la puissance nulle jusqu'à la puissance nominale PN, en fonction de l'enfoncement des grappes de commande 20 dans les assemblages de combustible 16.

Certaines de ces grappes de commande 20 sont destinées à assurer la régulation du fonctionnement du coeur 2, par exemple en puissance ou en température, et sont dénommées grappes de réglage. D'autres sont destinées à l'arrêt du réacteur nucléaire 1 et sont dénommées grappes d'arrêt.

Les grappes de commande 20 sont réunies en groupes en fonction de leur nature et de leur destination. Par exemple pour les réacteurs de type 900 MWe CPY, ces groupes sont dénommés G1, G2, N1, N2, R, SA, SB, SC, SD. Les groupes G1, G2, N1 et N2, dits groupes de puissance, sont utilisés en recouvrement pour la régulation en puissance et le groupe R est utilisé pour la régulation en température. Les groupes SA, SB, SC et SD sont utilisés pour réaliser l'arrêt d'urgence du réacteur nucléaire 1.

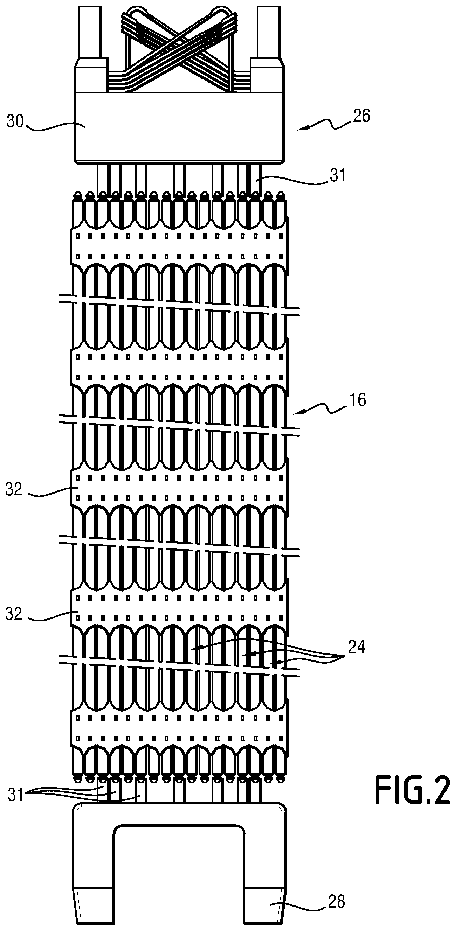

Comme illustré par la figure 2, chaque assemblage de combustible 16 comprend de manière classique un réseau de crayons de combustible 24 et un squelette 26 de support des crayons de combustible 24.

Le squelette 26 comprend classiquement un embout inférieur 28, un embout supérieur 30, un réseau de tubes-guides 31 reliant les deux embouts 28, 30 et destinés à recevoir les crayons des grappes de commande 20 et à positionner des grilles 32 formant entretoise pour positionner les réseaux de crayons de combustible 24 et de tubes-guides 31.

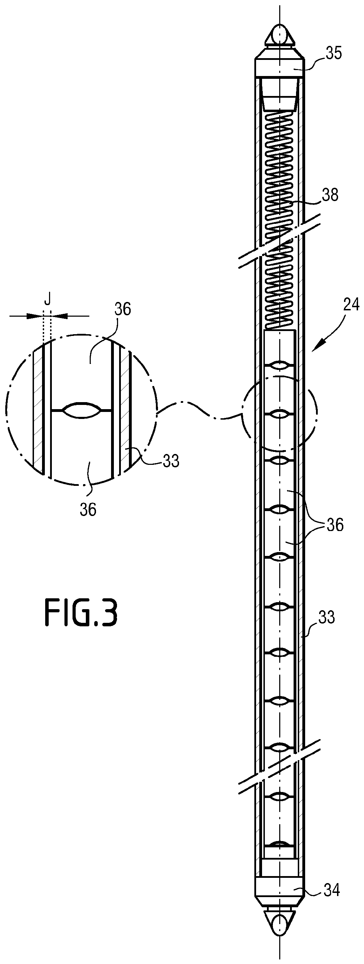

Comme illustré par la figure 3, chaque crayon de combustible 24 comprend de manière classique, une gaine 33 sous forme d'un tube fermé à son extrémité inférieure par un bouchon inférieur 34 et à son extrémité supérieure par un bouchon supérieur 35. Le crayon de combustible 24 comprend une série de pastilles 36 empilées dans la gaine 33 et prenant appui contre le bouchon inférieur 34. Un ressort de maintien 38 est disposé dans le tronçon supérieur de la gaine 33 pour prendre appui sur le bouchon supérieur 35 et sur la pastille 36 supérieure.

Classiquement, les pastilles 36 sont à base de matière fissile, par exemple d'oxyde d'uranium, et la gaine 33 est en alliage de zirconium.

Sur la figure 3, qui correspond à un crayon de combustible 24 tel qu'issu de fabrication, c'est-à-dire avant irradiation, il existe un jeu radial J entre les pastilles 36 et la gaine 33. Cela est illustré plus particulièrement par la partie cerclée agrandie de la figure 3.

Lorsque le réacteur nucléaire 1 va fonctionner, par exemple à sa puissance nominale PN, le crayon de combustible 24 va être, selon le terme employé dans la technique, conditionné.

Le conditionnement se caractérise essentiellement par la fermeture du jeu J entre les pastilles 36 et la gaine 33, due au fluage de la gaine 33 et au gonflement des pastilles 36.

Plus spécifiquement, on distingue, par exemple, les étapes suivantes pour chaque crayon de combustible 24 au cours de l'irradiation :
1) Sous l'effet de la différence de pression entre l'extérieur (eau du circuit primaire 8) et l'intérieur du crayon de combustible 24, la gaine 33 se déforme progressivement, par fluage, radialement vers l'intérieur du crayon de combustible 24. Toutes choses égales par ailleurs, la vitesse de fluage de la gaine 33 est une caractéristique du matériau qui la constitue. Par ailleurs, les produits de fission, qui sont en majorité retenus dans la pastille 36, induisent un gonflement de la pastille 36. Durant cette phase, la sollicitation de la gaine 33 du point de vue des contraintes est uniquement le fait de la pression différentielle existant entre l'extérieur et l'intérieur du crayon de combustible 24. Les contraintes dans la gaine 33 sont des contraintes de compression (négatives par convention).
2) Le contact entre la pastille 36 et la gaine 33 s'amorce au bout d'un laps de temps qui dépend essentiellement des conditions locales d'irradiation (puissance, flux neutronique, température...) et du matériau de la gaine 33. En réalité, le contact s'établit de façon progressive sur une période qui débute par un contact mou suivi par l'établissement d'un contact fort. L'augmentation de la pression de contact de la pastille 36 sur la face interne de la gaine 33 conduit à une inversion des contraintes dans la gaine 33 qui deviennent positives et tendent à solliciter la gaine 33 en traction.
3) Le gonflement de la pastille 36 se poursuit et la pastille 36 impose alors sa déformation à la gaine 33 vers l'extérieur du crayon de combustible 24. En régime permanent établi, cette expansion est suffisamment lente pour que la relaxation du matériau de la gaine 33 permette un équilibre des efforts dans la gaine 33. Une analyse montre que, dans ces conditions, le niveau des contraintes en traction est modéré (quelques dizaines de MPa) et ne présente pas de risque vis-à-vis de l'intégrité de la gaine 33.

S'il n'y a pas de risque de rupture de la gaine 33 en régime permanent du fait de l'équilibre thermomécanique dans la gaine 33 à des niveaux de contraintes assez faibles, un risque apparaît dès que la puissance fournie par le crayon de combustible 24 varie fortement.

En effet, une augmentation de puissance engendre une augmentation de la température des pastilles 36 contenues dans le crayon de combustible 24 et par conductance thermique une augmentation de la température de la gaine 33 du crayon de combustible 24. Etant donnée la différence des caractéristiques mécaniques (coefficient de dilatation thermique, module d'Young) et la différence de température entre la pastille 36 en matière fissile et la gaine 33 en alliage de zirconium, la pastille 36 va se dilater davantage que la gaine 33 et imposer sa déformation à cette dernière.

Par ailleurs un fonctionnement à puissance intermédiaire durant plusieurs jours a pour effet de déconditionner les crayons de combustible 24. Pour les portions des crayons de combustible 24 où le contact entre la gaine 33 et les pastilles 36 n'est pas établi, le jeu radial J s'agrandit. En ce qui concerne les portions des crayons de combustible 24 où le jeu J était fermé, le jeu J peut se rouvrir. En cas de jeu J ouvert, le fluage en compression de la gaine 33 par effet de pression reprend. Il en résulte une augmentation des niveaux de contraintes dans la gaine 33 quand survient un transitoire accidentel d'augmentation locale de puissance.

Par ailleurs, la présence dans l'espace entre la gaine 33 et la pastille 36 de produits de fission corrosifs, tels que l'iode, crée des conditions favorisant la corrosion sous contrainte. Ainsi, la déformation imposée par la pastille 36 à la gaine 33 lors d'un transitoire accidentel d'augmentation locale de puissance peut provoquer une rupture de la gaine 33 par corrosion sous contrainte par l'iode en situation d'interaction pastille-gaine (IPG).

Or, une telle rupture de la gaine 33 n'est pas admissible pour des raisons de sûreté puisqu'elle pourrait résulter en la libération de produits de fission dans le circuit primaire 8.

Des transitoires de puissance peuvent se produire lors d'un fonctionnement normal du réacteur nucléaire 1, c'est-à-dire dans les situations dites de catégorie 1. En effet, des variations de puissance peuvent être nécessaires notamment pour s'adapter aux besoins en énergie électrique du réseau électrique que le générateur 5 alimente. Des transitoires de puissance peuvent également se produire dans les situations accidentelles dites de catégorie 2, comme l'augmentation excessive de charge, le retrait incontrôlé de groupe(s) de grappes de commande 20 en puissance, la dilution d'acide borique ou encore la chute de grappes de commande 20 non détectée.

Partant de l'état du bilan des marges obtenu en fonctionnement normal, la durée acceptable de fonctionnement à puissance intermédiaire est déterminée de façon à garantir la non-rupture par interaction pastille-gaine des gaines 33 présentes dans le coeur 2 en cas de transitoire de puissance de catégorie 2, également appelé transitoire de puissance de classe 2.

Pour garantir l'intégrité des crayons de combustible 24 vis-à-vis de l'interaction pastille-gaine, l'invention propose de déterminer une première valeur limite d'un paramètre de fonctionnement respectif pour un fonctionnement à une première puissance P1 du réacteur, une deuxième valeur limite dudit paramètre de fonctionnement respectif pour un fonctionnement à une deuxième puissance P2 du réacteur, ainsi qu'une troisième valeur limite dudit paramètre de fonctionnement respectif pour un fonctionnement à une troisième puissance P3 du réacteur, comprise entre la première puissance P1 et la deuxième puissance P2.

Chaque valeur limite du paramètre de fonctionnement respectif est de préférence déterminée via le calcul d'une marge vis-à-vis du risque de rupture d'une gaine 33 par interaction pastille-gaine (IPG), cette marge étant appelée marge IPG.

Chaque marge IPG est un écart relatif à une grandeur caractéristique du réacteur nucléaire 1, c'est-à-dire un delta de ladite grandeur caractéristique du réacteur nucléaire 1, cet écart provenant de la prise en compte du risque de rupture des gaines 33 par l'interaction pastille-gaine.

Chaque marge IPG est, par exemple, choisie parmi le groupe consistant en : une marge en puissance et une marge en une grandeur thermomécanique associée à la gaine 33. La grandeur caractéristique du réacteur nucléaire 1, dont un écart, ou un delta, est déterminé pour calculer la marge IPG est alors la puissance locale ou la grandeur thermomécanique associée à la gaine 33. En complément facultatif, la marge IPG est ensuite convertie en une autre grandeur, par exemple en une durée de fonctionnement du réacteur nucléaire 1 à une puissance intermédiaire.

L'homme du métier comprendra que pour une marge IPG négative, plus la valeur absolue de la marge IPG est faible, plus la probabilité de rupture d'une gaine 33 est faible et que dès que la marge IPG devient nulle ou positive, la probabilité de rupture d'une gaine 33 est nulle.

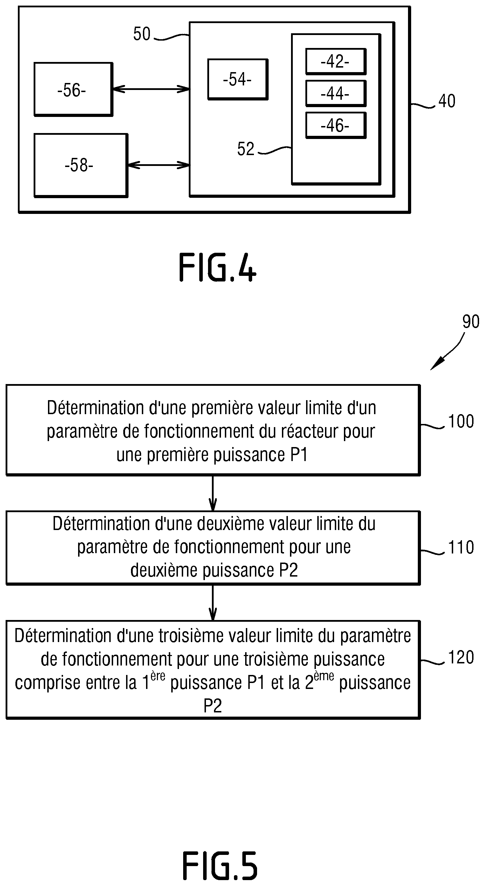

Pour déterminer les première, deuxième et troisième valeurs limites du paramètre de fonctionnement respectif, on utilise, par exemple, un système électronique 40, en particulier un système informatique, de détermination d'au moins une valeur limite d'au moins un paramètre de fonctionnement du réacteur nucléaire 1, tel que celui représenté à la figure 4.

Le système de détermination 40 comprend un premier module de détermination 42 configuré pour déterminer la première valeur limite d'un paramètre de fonctionnement respectif pour un fonctionnement à la première puissance P1 du réacteur.

Le système de détermination 40 comprend un deuxième module de détermination 44 configuré pour déterminer la deuxième valeur limite du paramètre de fonctionnement respectif pour un fonctionnement à la deuxième puissance P2 du réacteur.

Le fonctionnement à la puissance la plus faible parmi la première puissance P1 et la deuxième puissance P2 est un fonctionnement prolongé pour une durée supérieure ou égale à, par exemple, 8 heures sur une plage glissante de 24 heures, également appelé FPPI pour fonctionnement prolongé à puissance intermédiaire. La durée du fonctionnement prolongé à puissance intermédiaire peut atteindre plusieurs jours voire plusieurs semaines ou même plusieurs mois.

Le système de détermination 40 comprend un troisième module de détermination 46 configuré pour déterminer la troisième valeur limite du paramètre de fonctionnement respectif pour un fonctionnement à la troisième puissance P3 du réacteur, la troisième puissance P3 étant comprise entre la première puissance P1 et la deuxième puissance P2.

Dans l'exemple de la figure 4, le système de détermination 40 comprend une unité de traitement d'informations 50, formée par exemple d'une mémoire 52 et d'un processeur 54 associé à la mémoire 52. Il comprend en outre dans cet exemple des moyens d'entrée/sortie 56 et éventuellement un écran d'affichage 58.

Dans l'exemple de la figure 4, le premier module de détermination 42, le deuxième module de détermination 44 et le troisième module de détermination 46 sont réalisés chacun sous forme d'un logiciel exécutable par le processeur 54. La mémoire 52 de l'unité de traitement d'informations 50 est alors apte à stocker un premier logiciel de détermination configuré pour déterminer la première valeur limite du paramètre de fonctionnement respectif pour un fonctionnement du réacteur nucléaire 1 à la première puissance P1, un deuxième logiciel de détermination configuré pour déterminer la deuxième valeur limite dudit paramètre de fonctionnement pour un fonctionnement du réacteur nucléaire 1 à la deuxième puissance P2, et un troisième logiciel de détermination configuré pour déterminer la troisième valeur limite dudit paramètre de fonctionnement pour un fonctionnement du réacteur nucléaire 1 à la troisième puissance P3. Le processeur 54 de l'unité de traitement d'informations 50 est alors apte à exécuter le premier logiciel de détermination, le deuxième logiciel de détermination et le troisième logiciel de détermination.

En variante non représentée, le premier module de détermination 42, le deuxième module de détermination 44 et le troisième module de détermination 46 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Chaque module de détermination 42, 44, 46 est configuré pour déterminer la valeur limite respective du paramètre de fonctionnement via le calcul d'une marge IPG, notamment de manière à ce que la marge IPG reste toujours positive, notamment suite à une modification de la puissance du réacteur. Chaque module de détermination 42, 44, 46 est par exemple configuré pour déterminer chaque valeur limite respective du paramètre de fonctionnement, associée à un seuil de protection, en calculant pour la puissance correspondante du réacteur la valeur dudit paramètre correspondant à une valeur prédéfinie de la marge IPG. Cette valeur prédéfinie de la marge IPG est positive, tout en étant relativement proche de zéro, voire nulle, pour permettre un fonctionnement prolongé à ladite puissance correspondante du réacteur. Cette valeur prédéfinie de la marge IPG est par exemple sensiblement égale à 0,05 MPa lorsque la marge IPG est exprimée sous forme d'une densité d'énergie de déformation et obtenue, le cas échéant, à partir d'une méthodologie dite MIR, correspondant à une première méthodologie de calcul de la marge IPG, décrite ci-après. En variante, cette valeur prédéfinie de la marge IPG est sensiblement égale à 5 W/cm lorsque la marge IPG est exprimée sous forme d'une puissance à rupture et obtenue, le cas échéant, à partir d'une méthodologie dite de puissance à rupture, correspondant à une deuxième méthodologie de calcul de la marge IPG, décrite par la suite. L'homme du métier comprendra en outre que chacune des valeurs prédéfinies de la marge IPG est convertissable en une marge en durée autorisée de FPPI, par exemple sensiblement égale à 5 jours dans le cas des exemples ci-avant.

Le paramètre de fonctionnement est par exemple choisi parmi le groupe consistant en : un écart de température ΔT dans le coeur 2, une puissance linéique Pₗᵢₙ dans les crayons de combustible 24 et une variation de flux neutronique dans le temps dΦ/dt dans le coeur 2.

Le paramètre de fonctionnement pris en compte dépend par exemple du type de système de protection du réacteur (par exemple analogique/numérique) et du transitoire accidentel concerné. A titre d'exemple, un accident de refroidissement va correspondre au paramètre ΔT, une chute de l'une des grappes de commande au paramètre dΦ/dt, etc.

Chaque module de détermination 42, 44, 46 est alors configuré pour calculer ladite marge IPG, par exemple suivant une première méthodologie, telle que la méthodologie appelée MIR pour Méthodologie IPG Rénovée, décrite par exemple dans le document EP 1 556 870 B1.

Chaque module de détermination 42, 44, 46 est, selon cet exemple, configuré pour simuler au moins un transitoire de fonctionnement du réacteur nucléaire 1, pour calculer la valeur atteinte par une grandeur physique G au cours du transitoire de fonctionnement dans au moins une portion d'une gaine 33 d'un crayon de combustible 24, et pour déterminer, en tant que marge IPG l'écart entre la valeur maximale atteinte par ladite valeur calculée au cours du transitoire et une limite technologique du crayon de combustible 24. Dans cette méthodologie, les calculs neutroniques (simulation du transitoire de puissance) et thermomécaniques (calcul d'une grandeur physique G dans la gaine 33) sont couplés.

La grandeur physique G est par exemple la contrainte circonférentielle σ_{θ} ou la contrainte radiale σᵣ dans la gaine 33. En variante, la grandeur physique G est une fonction de contrainte(s), par exemple de la différence entre par exemple la contrainte circonférentielle σ_{θ} et la contrainte radiale σᵣ. En variante encore, la grandeur physique G est la densité d'énergie de déformation DED dans la gaine 33.

Le transitoire simulé par le module de détermination 42, 44, 46 est de préférence un transitoire choisi parmi le groupe consistant en :
- une augmentation excessive de charge,
- un retrait incontrôlé d'au moins un groupe de grappes de commande 20,
- une chute de l'une des grappes de commande 20, et
- une dilution incontrôlée d'acide borique.

L'augmentation excessive de charge correspond à une augmentation rapide du débit de vapeur dans le générateur de vapeur 3. Une telle augmentation entraîne un déséquilibre entre la puissance thermique du coeur 2 et la charge du générateur de vapeur 3. Ce déséquilibre conduit à un refroidissement du circuit primaire 8. Du fait de l'effet modérateur et/ou de la régulation de la température moyenne dans le coeur 2 par les grappes de commande 20, la réactivité, et donc le flux neutronique, augmentent dans le coeur 2. Ainsi, la puissance globale P fournie par le coeur 2 augmente rapidement.

Le retrait incontrôlé de groupes de grappes de commande 20 alors que le réacteur fonctionne provoque une augmentation incontrôlée de la réactivité. Il en résulte une augmentation rapide de la puissance nucléaire globale P et du flux de chaleur dans le coeur 2. Jusqu'à l'ouverture d'une vanne de décharge ou d'une soupape de sûreté du circuit secondaire 12, l'extraction de chaleur dans le générateur de vapeur 3 augmente moins vite que la puissance dégagée dans le circuit primaire 8. Il en résulte un accroissement de la température et de la pression de l'eau du circuit primaire 8. Pour simuler ce transitoire, on suppose un retrait des groupes de puissance à la vitesse maximale, par exemple de 72 pas/mn sur certains types de réacteurs à eau pressurisée, jusqu'à l'extraction totale des grappes de commande 20 concernées.

Si une ou plusieurs des grappes de commande 20 chute(nt) dans le coeur 2, il en résulte une réduction immédiate de la réactivité et de la puissance globale P dans le coeur 2. En l'absence d'action protectrice, le déséquilibre ainsi induit entre le circuit primaire 8 et le circuit secondaire 12 entraîne une diminution de la température d'entrée de l'eau dans le coeur 2, ainsi qu'une augmentation de la puissance neutronique par les contre-réactions, par exemple par effet Doppler, et la régulation de température, jusqu'à l'atteinte d'un nouvel équilibre entre le circuit primaire 8 et le circuit secondaire 12. La présence dans le coeur 2 du réacteur nucléaire 1 de la ou des grappes de commande 20 ayant chuté provoque une déformation de la distribution radiale de puissance, tandis que le retrait du groupe de régulation conduit à une modification axiale de la puissance.

La dilution incontrôlée d'acide borique consiste en une diminution de la concentration en bore de l'eau du circuit primaire 8 du réacteur nucléaire 1 due à une défaillance d'un système du réacteur nucléaire 1. Elle provoque une insertion de réactivité qui conduit à un accroissement local de la puissance linéique dans le coeur 2.

La limite technologique d'un crayon de combustible 24 est établie à partir des valeurs atteintes par la grandeur physique G dans des gaines lors de rampes de puissance expérimentales, réalisées en réacteur d'essais, sur des tronçons de crayons de combustible représentatifs des crayons de combustible 24 et préalablement irradiés en réacteur nucléaire de puissance et présentant différents taux de combustion. La limite technologique de la grandeur physique G correspond à la valeur minimale de la grandeur physique G parmi les valeurs atteintes au cours des essais expérimentaux. En deçà de cette limite, aucune rupture de crayon de combustible 24 par interaction pastille-gaine n'est envisagée. Au-delà, la probabilité d'une rupture de gaine 33 par interaction pastille-gaine n'est pas nulle.

En variante, chaque module de détermination 42, 44, 46 est configuré pour calculer ladite marge IPG suivant une deuxième méthodologie distincte de la première méthodologie, telle que la méthodologie appelée méthodologie de puissance à rupture, aussi notée méthodologie Pᵣᵤₚₜ.

Selon cette variante, chaque module de détermination 42, 44, 46 est, pour chaque assemblage de combustible 16, configuré pour simuler une évolution du fonctionnement du réacteur nucléaire 1 en appliquant à chaque crayon de combustible 24 une rampe de puissance nucléaire depuis la puissance nulle, afin de calculer les valeurs atteintes par une grandeur physique G localement dans chaque gaine 33 de chaque crayon de combustible 24 présent dans le coeur 2 et pour déterminer le cas échéant une puissance à rupture locale égale à la puissance associée à la valeur locale de la grandeur physique G lorsque cette valeur atteint la limite technologique. En cas de non-atteinte de la limite technologique, la puissance à rupture locale au point considéré est infinie. Dans cette deuxième méthodologie, la rampe de puissance simulée est une rampe théorique, indépendante des études neutroniques, et les calculs thermomécaniques sont alors découplés des calculs neutroniques

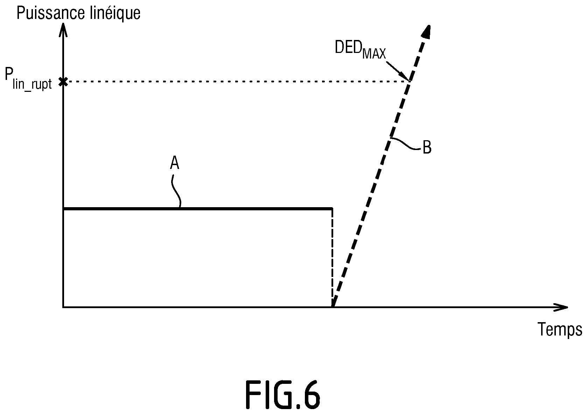

Selon cette variante, dans l'exemple de la figure 6, après un palier A à puissance sensiblement constante, une rampe de puissance B depuis la puissance nulle est appliquée chaque maille axiale de chaque crayon de combustible 24. Dans l'exemple de la figure 6, la rampe de puissance B est une rampe de puissance linéique, et la grandeur physique G est la densité d'énergie de déformation DED dans la gaine 33, la puissance à rupture P_{lin_rupt} correspondant alors à la densité d'énergie de déformation maximale DED_{MAX}, c'est-à-dire à la valeur de la densité d'énergie de déformation atteinte lors de la rupture de la gaine 33.

La puissance maximale estimée est, par exemple, une enveloppe de puissance en tout point du coeur 2 et tenant compte de tous les transitoires limitants. Cette puissance maximale estimée tient notamment compte des transitoires de puissance susceptibles de se produire dans les situations accidentelles dites de catégorie 2.

L'homme du métier comprendra alors que, dans l'exemple décrit ci-dessus, chaque module de détermination 42, 44, 46 est configuré pour calculer une marge IPG indifféremment suivant la première méthodologie, dite méthodologie IPG rénovée, ou suivant la deuxième méthodologie, dite méthodologie de puissance à rupture.

L'homme du métier comprendra en outre que pour la détermination des première, deuxième et troisième valeurs limites successives pour un paramètre de fonctionnement respectif, les premier, deuxième et troisième modules de détermination 42, 44, 46 sont de préférence configurés pour calculer la marge IPG correspondante suivant une même méthodologie parmi la première méthodologie et la deuxième méthodologie.

L'homme du métier comprendra en outre que les premier, deuxième et troisième modules de détermination 42, 44, 46 sont de préférence réalisés sous forme d'un unique module de détermination configuré pour calculer chacune des première, deuxième et troisième valeurs limites successives pour le paramètre de fonctionnement respectif. Selon cet exemple de réalisation préférentiel, cet unique module de détermination est réalisé sous forme d'un logiciel exécutable par le processeur 54, ou encore sous forme d'un composant logique programmable, tel qu'un FPGA, ou encore sous forme d'un circuit intégré dédié, tel qu'un ASIC.

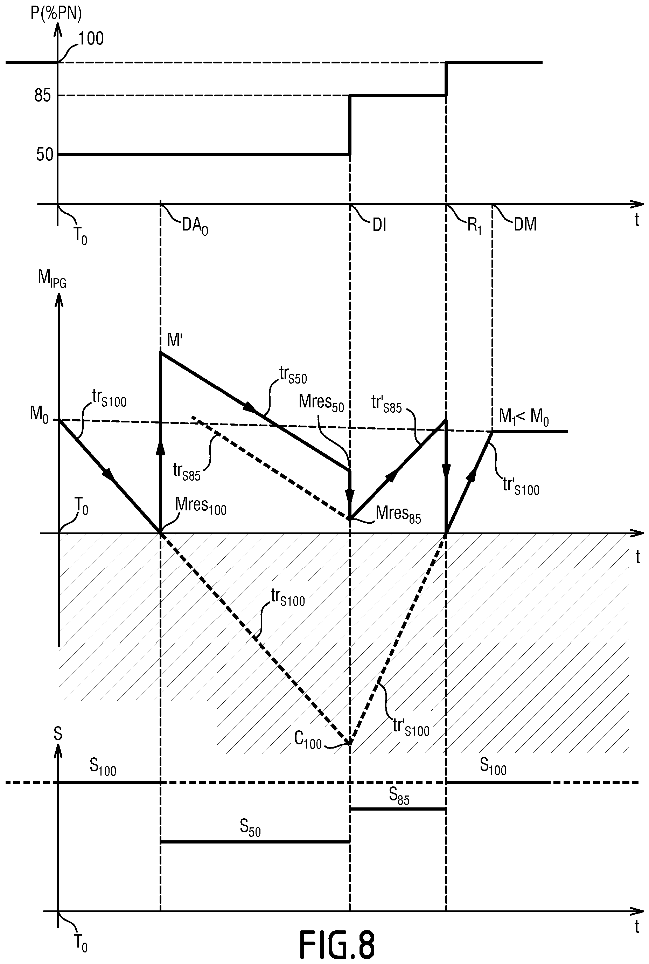

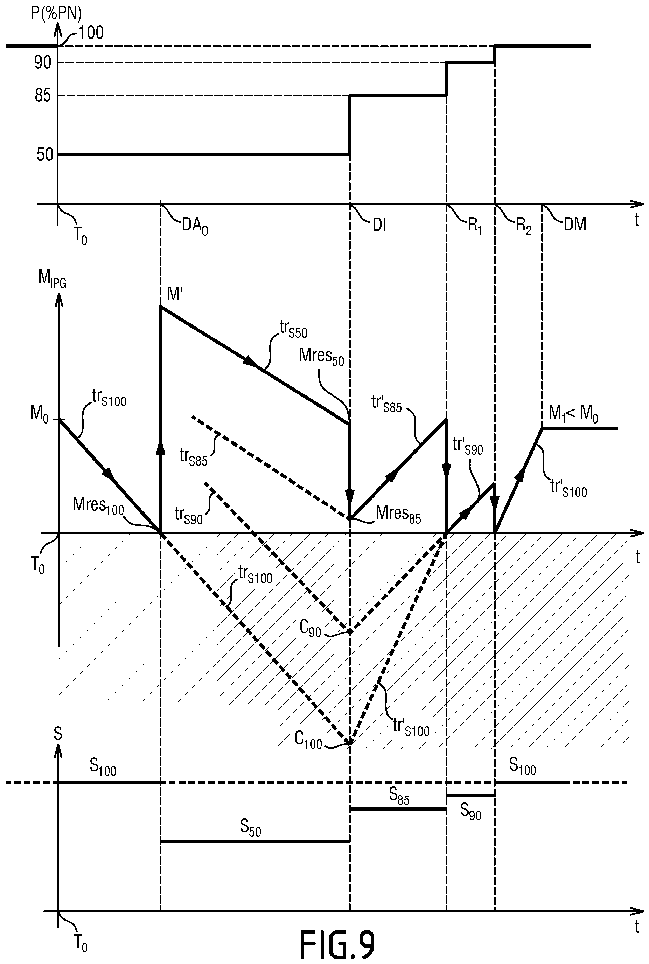

En complément, le système de détermination 40 selon l'invention est configuré pour prendre en compte une marge IPG cible M₁ après un déconditionnement thermomécanique suivi d'un reconditionnement thermomécanique des crayons de combustible 24 inférieure à la marge IPG M₀ prise en compte avant le déconditionnement thermomécanique des crayons de combustible 24, comme représenté sur les figures 8 et 9 où M₁ < M₀. Ceci permet de tenir compte du fait que, toutes choses égales par ailleurs, la marge IPG diminue légèrement au cours d'un cycle d'irradiation, avec le taux de combustion.

La marge IPG cible M₁ prise en compte après un déconditionnement thermomécanique suivi d'un reconditionnement thermomécanique des crayons de combustible 24 conduisant à un taux de combustion local des crayons de combustible correspond, partant de la marge IPG M₀ existant avant le déconditionnement thermomécanique des crayons de combustible (24), à la marge IPG qui aurait résulté d'un fonctionnement du réacteur 1 à sa puissance nominale PN jusqu'à obtenir le même taux de combustion local.

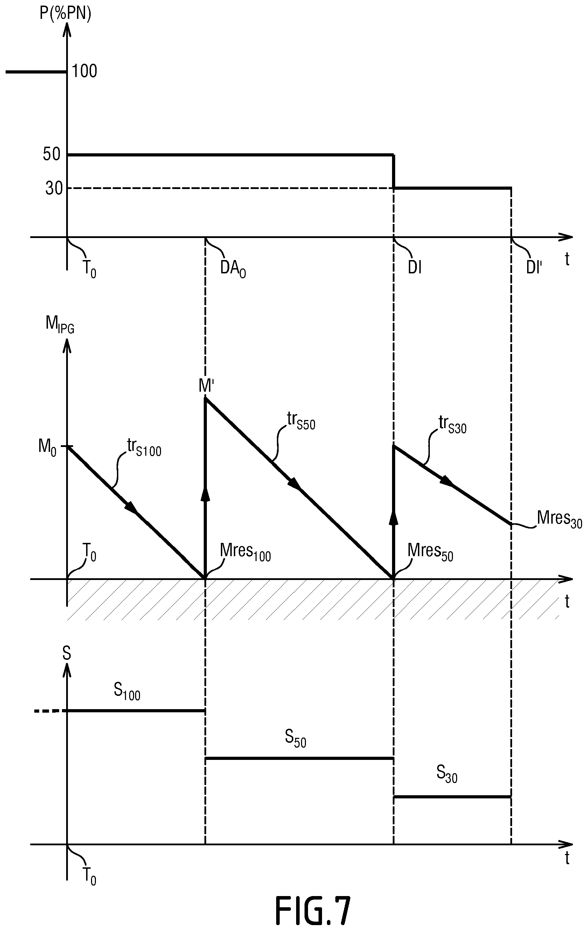

Le fonctionnement du système de détermination 40 selon l'invention va être désormais expliqué plus en détails au regard de la figure 5 représentant un organigramme du procédé de détermination 90 selon l'invention, ainsi que des figures 7 à 9 représentant chacune un ensemble de courbes d'évolution temporelle de la puissance, de la marge IPG et du seuil de protection pour différents exemples de déconditionnement et/ou de reconditionnement des crayons de combustible 24.

Lors d'une première étape 100, le système de détermination 40 détermine, via son premier module de détermination 42, la première valeur limite du paramètre de fonctionnement respectif, associée à un premier seuil de protection, pour le fonctionnement du réacteur nucléaire 1 à la première puissance P1.

Dans l'exemple de déconditionnement de la figure 7, la première puissance P1 est la puissance nominale PN du réacteur nucléaire 1, la puissance P étant initialement sensiblement égale à 100% PN. Le premier seuil de protection déterminé est alors le seuil S100 correspondant à ce fonctionnement à 100% PN.

Les figures 8 et 9 illustrent essentiellement des exemples de reconditionnement, la première puissance P1 considérée est une puissance intermédiaire du réacteur nucléaire 1, telle que la puissance intermédiaire égale à 50% PN. Le premier seuil de protection déterminé est alors le seuil S50 correspondant à ce fonctionnement à 50% PN.

Le système de détermination 40 détermine ensuite, lors de l'étape suivante 110 et via son deuxième module de détermination 44, la deuxième valeur limite du paramètre de fonctionnement respectif, associée à un deuxième seuil de protection, pour le fonctionnement du réacteur nucléaire 1 à la deuxième puissance P2.

Dans l'exemple de déconditionnement de la figure 7, la deuxième puissance P2 est une puissance intermédiaire du réacteur nucléaire 1, telle que la puissance intermédiaire égale à 30% PN. Le deuxième seuil de protection déterminé est alors le seuil S30 correspondant à ce fonctionnement à 30% PN.

Dans l'exemple de reconditionnement des figures 8 et 9, la deuxième puissance P2 est la puissance nominale PN du réacteur nucléaire 1, comme représenté par la puissance P finale égale à 100% PN. Le deuxième seuil de protection déterminé est alors le seuil S100 correspondant à ce fonctionnement à 100% PN.

Enfin, le système de détermination 40 détermine ensuite, lors de l'étape suivante 120 et via son troisième module de détermination 46, la troisième valeur limite du paramètre de fonctionnement respectif, associée à un troisième seuil de protection, pour le fonctionnement du réacteur nucléaire 1 à la troisième puissance P3 du réacteur, la troisième puissance P3 étant comprise entre la première puissance P1 et la deuxième puissance P2.

Autrement dit, la troisième valeur limite du paramètre de fonctionnement associée à un troisième seuil de protection, correspond à un palier de puissance entre la première puissance P1 et la deuxième puissance P2.

En complément, le procédé selon l'invention comprend en outre une étape, non représentée sur la figure 5, consistant à faire fonctionner le réacteur nucléaire 1 en vérifiant que la valeur du paramètre de fonctionnement ΔT, Pₗᵢₙ, Φ est inférieure à la valeur limite respective du paramètre de fonctionnement parmi les première, deuxième et troisième valeurs limites, déterminées lors des précédentes étapes 100, 110, 120, pour le fonctionnement du réacteur nucléaire 1 à la puissance correspondante parmi les première, deuxième et troisième puissances P1, P2, P3.

En pratique, en cas de réduction de la puissance du réacteur nucléaire 1, la puissance du réacteur nucléaire 1 sera modifiée dans un premier temps, avant d'adapter le seuil de protection dans un deuxième temps à ce changement de puissance, ceci à partir de la valeur limite respective du paramètre de fonctionnement calculée par le système de détermination 40 selon l'invention.

De manière inverse, en cas de réduction de la puissance du réacteur nucléaire 1, le seuil de protection est adapté de manière anticipée par rapport à ce changement de puissance du réacteur nucléaire 1.

Par souci de simplification des dessins, ces faibles décalages temporels ne sont pas représentés sur les figures 7 à 9.

Dans l'exemple de déconditionnement de la figure 7, le palier de puissance entre la première puissance P1 et la deuxième puissance P2 est la puissance intermédiaire égale à 50% PN. Le troisième seuil de protection déterminé est alors le seuil S50 correspondant à ce fonctionnement au palier de puissance égal à 50% PN.

Dans l'exemple de reconditionnement de la figure 8, le palier de puissance entre la première puissance P1 et la deuxième puissance P2 est la puissance intermédiaire égale à 85% PN. Le troisième seuil de protection déterminé est alors le seuil S85 correspondant à ce fonctionnement au palier de puissance égal à 85% PN.

L'exemple de reconditionnement de la figure 9 correspond à un cas à deux paliers intermédiaires de puissance successifs, un premier palier de puissance entre la première puissance P1 et la deuxième puissance P2 étant la puissance intermédiaire égale à 85% PN et un deuxième palier de puissance entre la première puissance P1 et la deuxième puissance P2 étant la puissance intermédiaire égale à 90%. Deux troisièmes seuils de protection, associés aux deux troisièmes valeurs limites du paramètre de fonctionnement, sont alors déterminés, un troisième seuil de protection étant le seuil S85 correspondant à ce fonctionnement au premier palier intermédiaire de puissance égal à 85% PN, et l'autre troisième seuil de protection étant le seuil S90 correspondant à ce fonctionnement au deuxième palier intermédiaire de puissance égal à 90% PN.

Il est en outre à noter sur les figures 8 et 9 que la marge IPG cible M₁ prise en compte par le système de détermination 40 après un déconditionnement thermomécanique suivi d'un reconditionnement thermomécanique des crayons de combustible 24 est légèrement inférieure à la marge IPG M₀ existant avant le déconditionnement thermomécanique des crayons de combustible 24, compte tenu de la diminution, toutes choses égales par ailleurs, de la marge IPG avec le taux de combustion.

Le fonctionnement du réacteur nucléaire 1 dans chacun des exemples des figures 7 à 9 va être à présent décrit plus en détail.

Sur la figure 7, à l'instant T₀ d'un cycle d'irradiation, la puissance du réacteur nucléaire 1 est réduite de sa puissance nominale PN au seuil intermédiaire de puissance égal, dans l'exemple illustré, à 50% PN. La marge IPG existant à cet instant T₀ du cycle, notée M₀, est d'abord consommée selon une pente tr_{S100}. Par commodité, les pentes tr et tr' sont représentées linéaires sur les figures 7, 8 et 9. En réalité, les pentes tr et tr' ont une formulation analytique plus complexe et suivent par exemple une courbe de type exponentielle inverse : e^{-t} pour tr et 1-e^{-t} pour tr', où t représente le temps. En variante, elles sont approchées par une succession de segments linéaires.

La durée maximale de fonctionnement dans ces conditions, correspondant à l'instant temporel DA₀ décompté à partir de T₀, c'est-à-dire DA₀ - T₀, est celle permettant de conserver une marge IPG résiduelle Mres₁₀₀ positive à tout instant. Lorsqu'il est nécessaire que la durée de FPPI soit supérieure à la durée DA₀ - T₀, le calcul des seuils de protection successifs S₅₀, S₃₀ permet de restaurer une marge IPG. En effet, les seuils de protection du réacteur nucléaire 1 sont des fonctions monotones croissantes de la puissance P du réacteur nucléaire 1.

La nouvelle marge M', visible sur la figure 7 lors du changement de seuil de protection de S₁₀₀ à S₅₀, est à son tour consommée selon une nouvelle pente tr_{S50}. A ce palier intermédiaire de puissance à 50% PN, la durée maximale de fonctionnement, correspondant à l'instant temporel intermédiaire DI, est à nouveau celle permettant de conserver une marge IPG résiduelle Mres₅₀ positive à tout instant, et l'utilisation du seuil de protection suivant S₃₀ permet de restaurer une marge IPG, avec une nouvelle marge M".

Cette nouvelle marge M", visible sur la figure 7 lors du changement de seuil de protection de S₅₀ à S₃₀, est à son tour consommée selon une nouvelle pente tr_{S30} jusqu' à un autre instant temporel intermédiaire DI', correspondant à la fin du FPPI dans cet exemple et pour lequel la marge IPG résiduelle Mres₃₀ reste supérieure à zéro.

L'homme du métier observera alors que le fait de déterminer la troisième valeur limite dudit paramètre de fonctionnement respectif, ici correspondant au seuil de protection S₅₀ pour le palier intermédiaire de puissance égal à 50% PN, permet d'avoir au final une marge IPG résiduelle plus importante, tout en ayant en outre une partie du FPPI effectué à la troisième puissance P3, ici égale à 50% PN, qui est supérieure à la puissance intermédiaire finale, ici la deuxième puissance P2 égale à 30% PN.

La figure 8 illustre tout d'abord un déconditionnement analogue à celui de la figure 7, sans toutefois la présence d'un palier intermédiaire de puissance lors de ce déconditionnement, le FPPI étant effectué seulement à 50% PN. Ce déconditionnement est, à l'issue du FPPI, suivi d'un reconditionnement, la fin du FPPI correspondant à l'instant temporel intermédiaire DI.

Cette figure 8 illustre alors la mise en oeuvre de l'invention lors du reconditionnement thermomécanique des crayons de combustible 24 à partir de cet instant temporel intermédiaire DI. L'utilisation, lors de ce reconditionnement, du palier intermédiaire à la troisième puissance P3 égale à 85% PN, comprise entre la première puissance P1, ici égale à 50% PN et la deuxième puissance P2, ici égale à 100% PN, permet d'effectuer ce reconditionnement dans des conditions de sécurité bien meilleures. En effet, le retour direct au palier de 100 %PN à l'issue de la durée du FPPI correspondant à l'instant temporel DI, c'est-à-dire DI - T₀, engendrerait une marge IPG qui deviendrait momentanément négative en situation hypothétique de classe 2 jusqu'à atteindre le point C₁₀₀, correspondant à l'extrémité inférieure de la courbe tr_{S100} sur la figure 8, la marge IPG devenant dans ces conditions positive au plus tôt à l'instant temporel R₁ qui définit la fin du premier palier de reconditionnement avant le possible retour à la puissance nominale PN. Le niveau de puissance maximal du palier intermédiaire de puissance, tel que 85% PN dans l'exemple de la figure 8, est déterminé de façon à avoir une marge IPG, correspondant à la marge IPG résiduelle Mres₈₅, positive au début du reconditionnement (instant temporel intermédiaire DI). A partir de ce niveau minimal Mres₈₅, la marge IPG est ensuite regagnée selon une pente tr'_{S85}. Le seuil de protection du réacteur est remonté au niveau associé au palier intermédiaire de puissance, tel que S₈₅ dans l'exemple de la figure 8. A l'instant temporel R₁, le réacteur nucléaire 1 est de nouveau exploité à sa puissance nominale PN, la puissance P correspondant à 100% PN sur la figure 8, avec le seuil de protection S₁₀₀ correspondant.

Afin d'optimiser encore la remontée vers la puissance nominale PN lors du reconditionnement thermomécanique des crayons de combustible 24 à partir de l'instant temporel intermédiaire DI, l'homme du métier observera que le système de détermination 40 selon l'invention permet également de déterminer plusieurs paliers intermédiaires de puissance, c'est-à-dire plusieurs troisièmes puissances P3 de valeurs successives distinctes et croissantes, entre la première puissance P1 et la deuxième puissance P2, comme illustré sur la figure 9, avec un premier palier intermédiaire à 85% PN et un seuil de protection S₈₅ associé, suivi d'un deuxième palier intermédiaire à 90% PN et un seuil de protection S₉₀ associé à partir de l'instant temporel R₁. Sur la figure 9, à l'instant temporel R₂, le réacteur nucléaire 1 est de nouveau exploité à sa puissance nominale PN, avec le seuil de protection S₁₀₀ correspondant.

De manière analogue, l'homme du métier comprendra qu'afin d'optimiser davantage la descente vers la puissance intermédiaire minimale lors du déconditionnement thermomécanique des crayons de combustible 24 à partir de l'instant temporel T₀, le système de détermination 40 selon l'invention permet également de déterminer plusieurs paliers intermédiaires de puissance, c'est-à-dire plusieurs troisièmes puissances P3 de valeurs successives distinctes et décroissantes, entre la première puissance P1 correspondant à la puissance nominale PN et la deuxième puissance P2 correspondant à la puissance intermédiaire minimale en fin de FPPI.

En complément, lorsque le réacteur nucléaire 1 est à nouveau à sa puissance nominale PN, à l'issue du reconditionnement thermomécanique des crayons de combustible 24, si un nouveau FPPI doit être effectué au cours du même cycle d'irradiation, une période de maintien à 100 %PN est de préférence requise pour garantir une marge IPG équivalente à la marge IPG qui aurait résulté d'un fonctionnement sans FPPI. La durée de cette période de maintien à 100 %PN est par exemple, de manière conservative, supérieure ou égale à la durée du FPPI, ou de façon plus optimisée égale à la durée correspondant à l'instant temporel DM d'atteinte de la marge M₁, à compter de l'instant du retour à la puissance nominale PN, c'est-à-dire DM - R₁ dans l'exemple de la figure 8, ou encore DM - R₂ dans l'exemple de la figure 9.

Ainsi, le procédé de détermination 90 et le système de détermination 40 selon l'invention permettent, en complément de la détermination des première et deuxième valeurs limites du paramètre de fonctionnement, de déterminer une troisième valeur limite de ce paramètre de fonctionnement respectif pour le fonctionnement du réacteur nucléaire 1 à la troisième puissance P3 étant comprise entre la première puissance P1 et la deuxième puissance P2, c'est-à-dire un seuil intermédiaire de protection, ceci notamment afin de gagner en sécurité de fonctionnement, la marge IPG résiduelle correspondant à ce palier intermédiaire de puissance et au seuil de protection associé étant alors plus importante que si le réacteur nucléaire 1 avait fonctionné directement à la deuxième puissance P2.

Comme illustré précédemment au vu des figures 7 à 9, cette sécurité de fonctionnement accrue est vérifiée aussi bien lors d'un déconditionnement des crayons de combustible 24 où la deuxième puissance P2 correspond à la puissance intermédiaire minimale, que lors d'un reconditionnement des crayons de combustible 24 où la deuxième puissance P2 correspond à la puissance nominale PN.

Le procédé de détermination 90 et le système de détermination 40 selon l'invention permettent ainsi une meilleure adéquation entre la gestion du combustible et la manoeuvrabilité du réacteur nucléaire 1 pour l'exploitant : marges IPG accrues, possibilité d'allonger les durées de FPPI.

On conçoit ainsi que le procédé de détermination 90 et le système de détermination 40 selon l'invention permettent de mieux exploiter les capacités du réacteur nucléaire 1, tout en conservant un fonctionnement sûr.

A la lecture de la description ci-dessus, l'homme du métier comprendra que par palier de puissance, on entend un fonctionnement du réacteur nucléaire à ladite puissance, en particulier à la troisième puissance, pendant une durée non négligeable par rapport à la durée de fonctionnement du réacteur à au moins une de la première et de la deuxième puissance, comme le montrent les figures 7 à 9.

Autrement dit, un palier de puissance correspond à une durée minimale de fonctionnement du réacteur à ladite puissance, telle qu'une durée supérieure à une heure.

L'homme du métier comprendra notamment qu'un palier de puissance diffère donc d'un fonctionnement transitoire, c'est-à-dire de brève durée, à ladite puissance. L'homme du métier comprendra de même qu'un palier de puissance diffère d'un fonctionnement ponctuel à ladite puissance au cours d'une variation de puissance entre une première puissance et une deuxième puissance.

## Revendications

1. Procédé de détermination d'au moins une valeur limite (ΔTₘₐₓ, Pₗᵢₙₘₐₓ, (dΦ/dt)ₘₐₓ) d'au moins un paramètre de fonctionnement (ΔT, Pₗᵢₙ, dΦ/dt) d'un réacteur nucléaire (1) comprenant un coeur (2) dans lequel des assemblages de combustible (16) sont chargés, les assemblages de combustible (16) comprenant des crayons de combustible (24) comportant chacun des pastilles (36) de combustible nucléaire et une gaine (33) entourant les pastilles (36),
le procédé étant mis en oeuvre par un système électronique de détermination (40) et comprenant les étapes suivantes :
- déterminer (100) une première valeur limite d'un paramètre de fonctionnement respectif pour un fonctionnement à une première puissance (P1) du réacteur nucléaire (1) ;
- déterminer (110) une deuxième valeur limite dudit paramètre de fonctionnement respectif pour un fonctionnement à une deuxième puissance (P2) du réacteur nucléaire (1) ;
le fonctionnement à la puissance la plus faible parmi la première puissance (P1) et la deuxième puissance (P2) étant un fonctionnement prolongé pour une durée supérieure ou égale à 8 heures sur une plage glissante de 24 heures ; et
- déterminer (120) une troisième valeur limite dudit paramètre de fonctionnement respectif pour un fonctionnement à une troisième puissance (P3) du réacteur nucléaire (1), la troisième puissance (P3) correspondant à un palier de puissance et étant comprise entre la première puissance (P1) et la deuxième puissance (P2) ;
**caractérisé en ce que**
le réacteur nucléaire (1) est dans un mode de déconditionnement thermomécanique des crayons de combustible (24), et la première puissance (P1) est supérieure à la deuxième puissance (P2), ou dans un mode de reconditionnement thermomécanique des crayons de combustible (24), et la première puissance (P1) est inférieure à la deuxième puissance (P2),
dans le mode de déconditionnement thermomécanique des crayons de combustible (24), la première puissance (P1) est sensiblement égale à la puissance nominale (PN) du réacteur nucléaire (1), et la deuxième puissance (P2) est sensiblement égale à une puissance cible pour un fonctionnement prolongé à puissance intermédiaire du réacteur nucléaire (1),
dans le mode de reconditionnement thermomécanique des crayons de combustible (24), la première puissance (P1) est sensiblement égale à une puissance cible pour un fonctionnement prolongé à puissance intermédiaire du réacteur nucléaire (1), et la deuxième puissance (P2) est sensiblement égale à la puissance nominale (PN) du réacteur nucléaire (1).

2. Procédé selon l'une quelconque des revendications précédentes, dans lequel le paramètre de fonctionnement est choisi parmi le groupe consistant en : un écart de température (ΔT) dans le coeur (2), une puissance linéique (Pₗᵢₙ) dans les crayons de combustible (24) et une variation de flux neutronique (dΦ/dt) dans le coeur (2).

3. Procédé selon la revendication 1 ou 2, dans lequel chaque valeur limite du paramètre de fonctionnement respectif est déterminée via un calcul d'une marge Interaction Pastille-Gaine, IPG.

4. Procédé selon la revendication 3, dans lequel le calcul de la marge IPG comprend les sous-étapes de :
ii) simuler au moins un transitoire de fonctionnement du réacteur nucléaire (1),
iii) calculer la valeur atteinte par une grandeur physique (G) au cours du transitoire de fonctionnement dans au moins une partie d'une gaine (33) d'un crayon de combustible (24), et
iv) déterminer, en tant que marge IPG, l'écart entre la valeur maximale atteinte par ladite valeur calculée à la sous-étape ii) au cours du transitoire et une limite technologique du crayon de combustible (24).

5. Procédé selon la revendication 4, dans lequel le transitoire simulé à la sous-étape ii) est un transitoire choisi parmi le groupe consistant en :
- une augmentation excessive de charge,
- un retrait incontrôlé d'au moins un groupe de grappes de commande (20),
- une chute de l'une des grappes de commande (20), et
- une dilution incontrôlée d'acide borique.

6. Procédé selon la revendication 4 ou 5, dans lequel la grandeur physique (G) est choisie parmi le groupe consistant en :
- une contrainte ou une fonction de contrainte(s) dans la gaine (33) ; et
- une densité d'énergie de déformation dans la gaine (33).

7. Procédé selon l'une quelconque des revendications précédentes, dans lequel le procédé comprend en outre :
- faire fonctionner le réacteur nucléaire (1) en vérifiant que la valeur du paramètre de fonctionnement (ΔT, Pₗᵢₙ, dΦ/dt) est inférieure à la valeur limite respective du paramètre de fonctionnement parmi les première, deuxième et troisième valeurs limites pour le fonctionnement du réacteur nucléaire (1) à la puissance correspondante parmi les première, deuxième et troisième puissances (P1, P2, P3).

8. Procédé selon la revendication 7, dans lequel, lors du fonctionnement du réacteur nucléaire (1), après un déconditionnement thermomécanique suivi d'un reconditionnement thermomécanique des crayons de combustible (24) conduisant à un taux de combustion local des crayons de combustible (24), une durée minimale (DM-R₁ ; DM-R₂) de fonctionnement du réacteur nucléaire (1) à sa puissance nominale (PN) avant un nouveau déconditionnement thermomécanique des crayons de combustible (24) est la durée correspondant à l'atteinte d'une marge IPG cible (M₁),
la marge IPG cible (M₁) correspondant, partant de la marge IPG (M₀) existant avant le déconditionnement thermomécanique des crayons de combustible (24), à la marge IPG qui aurait résulté d'un fonctionnement à puissance nominale du réacteur (1) jusqu'à obtenir le même taux de combustion local.

9. Programme d'ordinateur comportant des instructions logicielles qui, lorsqu'elles sont exécutées par un ordinateur, mettent en oeuvre un procédé selon l'une quelconque des revendications précédentes.

10. Système électronique de détermination d'au moins une valeur limite (ΔT_{MAX}, P_{linMAX}, (dΦ/dt)_{MAX}) d'au moins un paramètre de fonctionnement (ΔT, Pₗᵢₙ, dΦ/dt) d'un réacteur nucléaire (1) comprenant un coeur (2) dans lequel des assemblages de combustible (16) sont chargés, les assemblages de combustible (16) comprenant des crayons de combustible (24) comportant chacun des pastilles (36) de combustible nucléaire et une gaine (33) entourant les pastilles (36),
le système (40) comprenant :
- un premier module de détermination (42) configuré pour déterminer une première valeur limite d'un paramètre de fonctionnement respectif pour un fonctionnement à une première puissance (P1) du réacteur nucléaire (1) ;
- un deuxième module de détermination (44) configuré pour déterminer une deuxième valeur limite dudit paramètre de fonctionnement respectif pour un fonctionnement à une deuxième puissance (P2) du réacteur nucléaire (1) ;
le fonctionnement à la puissance la plus faible parmi la première puissance (P1) et la deuxième puissance (P2) étant un fonctionnement prolongé pour une durée supérieure ou égale à 8 heures sur une plage glissante de 24 heures et
- un troisième module de détermination (46) configuré pour déterminer une troisième valeur limite dudit paramètre de fonctionnement respectif pour un fonctionnement à une troisième puissance (P3) du réacteur nucléaire (1), la troisième puissance (P3) correspondant à un palier de puissance et étant comprise entre la première puissance (P1) et la deuxième puissance (P2) ;
**caractérisé en ce que**
le système est adapté de manière à ce que quand le réacteur nucléaire (1) est dans un mode de déconditionnement thermomécanique des crayons de combustible (24), la première puissance (P1) est supérieure à la deuxième puissance (P2), et quand le réacteur nucléaire (1) est dans un mode de reconditionnement thermomécanique des crayons de combustible (24), la première puissance (P1) est inférieure à la deuxième puissance (P2), où
dans le mode de déconditionnement thermomécanique des crayons de combustible (24), la première puissance (P1) est sensiblement égale à la puissance nominale (PN) du réacteur nucléaire (1), et la deuxième puissance (P2) est sensiblement égale à une puissance cible pour un fonctionnement prolongé à puissance intermédiaire du réacteur nucléaire (1),
dans le mode de reconditionnement thermomécanique des crayons de combustible (24), la première puissance (P1) est sensiblement égale à une puissance cible pour un fonctionnement prolongé à puissance intermédiaire du réacteur nucléaire (1), et la deuxième puissance (P2) est sensiblement égale à la puissance nominale (PN) du réacteur nucléaire (1).

## Patentansprüche

1. Verfahren zum Bestimmung mindestens eines Grenzwerts (ΔTₘₐₓ, Pₗᵢₙₘₐₓ, (dΦ/dt)ₘₐₓ) mindestens eines Betriebsparameters (ΔT, Pₗᵢₙ, dΦ/dt) eines Kernreaktors (1), umfassend einen Kern (2), in den Brennstoffanordnungen (16) geladen werden, die Brennstoffanordnungen (16) umfassend Brennstäbe (24), die jeweils Pellets (36) aus Kernbrennstoff und eine die Pellets (36) umgebende Hülle (33) aufweisen,
wobei das Verfahren von einem elektronischen Überwachungssystem (40) implementiert ist und Folgendes umfasst:
- Bestimmen (100) eines ersten Grenzwerts eines jeweiligen Betriebsparameters für einen Betrieb bei einer ersten Leistung (P1) des Kernreaktors (1);
- Bestimmen (110) eines zweiten Grenzwerts eines jeweiligen Betriebsparameters für einen Betrieb bei einer zweiten Leistung (P2) des Kernreaktors (1);
wobei der Betrieb bei der niedrigeren von der ersten Leistung (P1) und der zweiten Leistung (P2) ein anhaltender Betrieb über eine Dauer von 8 Stunden oder mehr in einem gleitenden Bereich von 24 Stunden ist; und
- Bestimmen (120) eines dritten Grenzwerts des jeweiligen Betriebsparameters für einen Betrieb bei einer dritten Leistung (P3) des Kernreaktors (1), wobei die dritte Leistung (P3) einer Leistungsstufe entspricht und zwischen der ersten Leistung (P1) und der zweiten Leistung (P2) liegt; **dadurch gekennzeichnet, dass** der Reaktor (1) in einem Modus thermomechanischer Entkonditionierung der Brennstäbe (24) ist und die erste Leistung (P1) höher ist als die zweite Leistung (P2), oder in einem Modus thermomechanischer Rekonditionierung der Brennstäbe (24) ist, und die erste Leistung (P1) niedriger ist als die zweite Leistung (P2),
wobei die erste Leistung (P1) in dem Modus thermomechanischer Entkonditionierung der Brennstäbe (24) im Wesentlichen gleich wie die Nennleistung (PN) des Kernreaktors (1) ist, und die zweite Leistung (P2) im Wesentlichen gleich wie eine Zielleistung für einen anhaltenden Betrieb des Kernreaktors (1) bei mittlerer Leistung ist,
wobei die erste Leistung (P1) in dem Modus thermomechanischer Rekonditionierung von Brennstäben (24) im Wesentlichen gleich wie eine Zielleistung für einen anhaltenden Betrieb bei mittlerer Leistung des Kernreaktors (1) ist, und die zweite Leistung (P2) im Wesentlichen gleich wie die Nennleistung (PN) des Kernreaktors (1) ist.

2. Verfahren nach einem der vorherigen Ansprüche, wobei der Betriebsparameter ausgewählt ist aus der Gruppe, bestehend aus: einer Temperaturabweichung (ΔT) in dem Kern (2), einer linearen Leistung (Pₗᵢₙ) in den Brennstäben (24) und einer Änderung des Neutronenflusses (dΦ/dt) in dem Kern (2).

3. Verfahren nach Anspruch 1 oder 2, wobei jeder Grenzwert des jeweiligen Betriebsparameters über eine Berechnung einer Spanne für Pellet-Hüllen-Wechselwirkung, IPG, bestimmt wird.

4. Verfahren nach Anspruch 3, wobei die Berechnung der IPG-Spanne den folgenden Teilschritten entspricht:
ii) Simulieren von mindestens einem transienten Betriebszustand des Kernreaktors (1),
iii) Berechnen des Werts, den eine physikalische Größe (G) während des Betriebsübergangs in mindestens einem Teil einer Hülle (33) eines Brennstabs (24) erreicht, und
iv) Bestimmen, als IPG-Spanne, der Abweichung zwischen dem Maximalwert, der durch den in Teilschritt ii) berechneten Wert während des Übergangs erreicht wird, und einer technologischen Grenze des Brennstabs (24).

5. Verfahren nach Anspruch 4, wobei der in Teilschritt ii) simulierte Transient ein Transient ist, der ausgewählt ist aus der Gruppe, bestehend aus:
- einer übermäßigen Zunahme der Belastung,
- einem unkontrollierten Zurückziehen von mindestens einer Gruppe von Steuerstäben (20),
- einem Herunterfallen eines der Steuerstäbe (20), und
- eine unkontrollierte Verdünnung von Borsäure.

6. Verfahren nach Anspruch 4 oder 5, wobei die physikalische Größe (G) ausgewählt ist aus der Gruppe, bestehend aus:
- eine Spannung oder eine Spannungsfunktion(en) in der Hülle (33); und
- eine Dichte von Verformungsenergie in der Hülle (33).

7. Verfahren nach einem der vorherigen Ansprüche, wobei das Verfahren ferner Folgendes umfasst:
- Betreiben des Kernreaktors (1) durch Verifizieren, dass der Wert des Betriebsparameters (ΔT, Pₗᵢₙ, dΦ/dt) kleiner ist als der jeweilige Grenzwert des Betriebsparameters aus dem ersten, dem zweiten und dem dritten Grenzwert für den Betrieb des Kernreaktors (1) bei der entsprechenden Leistung aus der ersten, zweiten und dritten Leistung (P1, P2, P3).

8. Verfahren nach Anspruch 7, wobei beim Betrieb des Kernreaktors (1) nach einer thermomechanischen Dekonditionierung gefolgt von einer thermomechanischen Rekonditionierung der Brennstäbe (24), die zu einer lokalen Abbrandrate der Brennstäbe (24) führt, eine minimale Zeitdauer (DM-R₁; DM-R₂) des Betriebs des Kernreaktors (1) bei seiner Nennleistung (PN) vor einer erneuten thermomechanischen Dekonditionierung der Brennstäbe (24) die Dauer ist, die dem Erreichen einer angestrebten IPG-Spanne (M₁) entspricht,
die angestrebte IPG-Spanne (M₁), die ausgehend von der vor der thermomechanischen Dekonditionierung der Brennstäbe (24) bestehenden IPG-Spanne (M₀) der IPG-Spanne entspricht, die aus einem Betrieb des Reaktors (1) bei Nennleistung resultiert wäre, bis die gleiche lokale Abbrandrate erlangt wird.

9. Computerprogramm, umfassend Softwareanweisungen, die, wenn sie von einem Computer ausgeführt werden, ein Verfahren nach einem der vorherigen Ansprüche implementieren.

10. Elektronisches System zum Bestimmen mindestens eines Grenzwerts (ΔT_{MAX}, P_{linMAX}, (dΦ/dt)_{MAX}) mindestens eines Betriebsparameters (ΔT, Pₗᵢₙ, dΦ/dt) eines Kernreaktors (1), umfassend einen Kern (2), in den Brennstoffanordnungen (16) geladen werden, die Brennstoffanordnungen (16) umfassend Brennstäbe (24), die jeweils Pellets (36) aus Kernbrennstoff und eine die Pellets (36) umgebende Hülle (33) aufweisen,
das System (40) umfassend:
- ein erstes Bestimmungsmodul (42), das konfiguriert ist, um einen ersten Grenzwert eines jeweiligen Betriebsparameters für einen Betrieb bei einer ersten Leistung (P1) des Kernreaktors (1) zu bestimmen;
- ein zweites Bestimmungsmodul (44), das konfiguriert ist, um einen zweiten Grenzwert des jeweiligen Betriebsparameters für einen Betrieb bei einer zweiten Leistung (P2) des Kernreaktors (1) zu bestimmen;
wobei der Betrieb bei der niedrigeren von der ersten Leistung (P1) und der zweiten Leistung (P2) ein anhaltender Betrieb über eine Dauer von 8 Stunden oder mehr in einem gleitenden Bereich von 24 Stunden ist; und
- ein drittes Bestimmungsmodul (46), das konfiguriert ist, um einen dritten Grenzwert des jeweiligen Betriebsparameters für einen Betrieb bei einer dritten Leistung (P3) des Kernreaktors (1) zu bestimmen, wobei die dritte Leistung (P3) einer Leistungsstufe entspricht und zwischen der ersten Leistung (P1) und der zweiten Leistung (P2) liegt;
**dadurch gekennzeichnet, dass** das System angepasst ist, dass, wenn der Kernreaktor (1) in einem Modus thermomechanischer Dekonditionierung der Brennstäbe (24) ist, die erste Leistung (P1) höher ist als die zweite Leistung (P2), und wenn der Kernreaktor (1) in einem Modus thermomechanischer Rekonditionierung der Brennstäbe (24) ist, die erste Leistung (P1) niedriger als die zweite Leistung (P2) ist, wobei
die erste Leistung (P1) in dem Modus thermomechanischer Entkonditionierung der Brennstäbe (24) im Wesentlichen gleich wie die Nennleistung (PN) des Kernreaktors (1) ist, und die zweite Leistung (P2) im Wesentlichen gleich wie eine Zielleistung für einen anhaltenden Betrieb des Kernreaktors (1) bei mittlerer Leistung ist,
die erste Leistung (P1) in dem Modus thermomechanischer Rekonditionierung von Brennstäben (24) im Wesentlichen gleich wie eine Zielleistung für einen anhaltenden Betrieb bei mittlerer Leistung des Kernreaktors (1) ist, und die zweite Leistung (P2) im Wesentlichen gleich wie die Nennleistung (PN) des Kernreaktors (1) ist.

## Claims

1. A method for determining at least one threshold value (ΔTₘₐₓ, Pₗᵢₙₘₐₓ, (dΦ/dt)ₘₐₓ) of at least one operating parameter (ΔT, Pₗᵢₙ, dΦ/dt) of a nuclear reactor (1) comprising a core (2) in which fuel assemblies (16) are loaded, the fuel assemblies (16) comprising fuel rods (24) each including nuclear fuel pellets (36) and a cladding (33) surrounding the pellets (36),
the method being implemented by an electronic determination system (40) and comprising the following steps:
- determining (100) a first threshold value of a respective operating parameter for an operation of the nuclear reactor (1) at a first power (P1);
- determining (110) a second threshold value of a respective operating parameter for an operation of said nuclear reactor (1) at a second power (P2);
the operation at the lower power of the first (P1) and second (P2) powers being an operation continued for a duration of at least 8 hours over a 24-hour sliding window; and
- determining (120) a third threshold value of said respective operating parameter for an operation of said nuclear reactor (1) at a third power (P3), the third power (P3) corresponding to a power level and being between the first power (P1) and the second power (P2);
**characterized in that** the nuclear reactor (1) is in a thermomechanical deconditioning mode of the fuel rods (24), and the first power (P1) is greater than the second power (P2), or in a thermomechanical reconditioning mode of the fuel rods (24), and the first power (P1) is less than the second power (P2),
in the thermomechanical deconditioning mode of the fuel rods (24), the first power (P1) is substantially equal to the rated power (PN) of the nuclear reactor (1), and the second power (P2) is substantially equal to a target power for a sustained operation at intermediate power of the nuclear reactor (1),
in the thermomechanical reconditioning mode of the fuel rods (24), the first power (P1) is equal to a target power for a sustained operation at intermediate power of the nuclear reactor (1), and the second power (P2) preferably being substantially equal to the rated power (PN) of the nuclear reactor (1).

2. The method according to any one of the preceding claims, wherein the operating parameter is selected from the following group: a temperature deviation (ΔT) in the core (2), a linear power (Pₗᵢₙ) in the fuel rods (24) and a neutron flux variation (dΦ/dt) in the core (2).

3. The method according to claim 1 or 2, wherein each threshold value of the respective operating parameter is determined via a calculation of a PCI, Pellet-Cladding Interaction, margin.

4. The method according to claim 3, wherein the calculation of the PCI margin comprises the following sub-steps:
ii) simulating at least one operating transition of the nuclear reactor (1),
iii) calculating the value reached by at least one physical property (G) during the operating transition in at least part of a cladding (33) of a fuel rod (24), and
iv) determining, as PCI margin, the deviation between the maximum value reached by said value calculated in sub-step ii) during the transition and a technological limit of the fuel rod (24).

5. The method according to claim 4, wherein the transition simulated in sub-step ii) is a transition chosen from among the group consisting of:
- an excessive load increase,
- an uncontrolled withdrawal of at least one group of control clusters (20),
- a fall of one of the control clusters (20), and
- an uncontrolled boric acid dilution.

6. The method according to claim 4 or 5, wherein the physical property (G) is chosen from among the group consisting of:
- a constraint or a constraint function in the cladding (33); and
- a deformation energy density in the cladding (33).

7. The method according to any one of the preceding claims, wherein the method further comprises:
- operating the nuclear reactor (1) while verifying that the value of the operating parameter (ΔT, Pₗᵢₙ, dΦ/dt) is below the respective threshold value of the operating parameter among the first, second and third threshold values for the operation of the nuclear reactor (1) at the corresponding power among the first, second and third powers (P1, P2, P3).

8. The method according to claim 7, wherein, during the operation of the nuclear reactor (1), after a thermomechanical deconditioning followed by a thermomechanical reconditioning of the fuel rods (24) leading to a local combustion rate of the fuel rods (24), a minimum operating duration (DM-R₁; DM-R₂) of the nuclear reactor (1) at its rated power (PN) before a new thermomechanical deconditioning of the fuel rods (24) is the duration corresponding to reaching a target PCI margin (M₁),
the target PCI margin (M₁) corresponding, starting from the PCI margin (M₀) existing before the thermomechanical deconditioning of the fuel rods (24), to the PCI margin that would have resulted from an operation at rated power of the reactor (1) until obtaining the same local combustion rate.

9. A computer program comprising software instructions which, when executed by a computer, carry out a method according to any one of the preceding claims.

10. An electronic system for determining at least one threshold value (ΔT_{MAX}, P_{linMAX}, (dΦ/dt)_{MAX}) of at least one operating parameter (ΔT, Pₗᵢₙ, dΦ/dt) of a nuclear reactor (1) comprising a core (2) in which fuel assemblies (16) are loaded, the fuel assemblies (16) comprising fuel rods (24) each including nuclear fuel pellets (36) and a cladding (33) surrounding the pellets (36),
the system (40) comprising:
- a first determination module (42) configured to determine a first threshold value of a respective operating parameter for an operation of the nuclear reactor (1) at a first power (P1);
- a second determination module (44) configured to determine a second threshold value of a respective operating parameter for an operation of said nuclear reactor (1) at a second power (P2);
the operation at the lower power of the first (P1) and second (P2) powers being an operation continued for a duration of at least 8 hours over a 24-hour sliding window; and
- a third determination module (46) configured to determine a third threshold value of said respective operating parameter for an operation of said nuclear reactor (1) at a third power (P3), the third power (P3) corresponding to a power level and being between the first power (P1) and the second power (P2);
**characterized in that** the system is adapted so that when the nuclear reactor (1) is in a thermomechanical deconditioning mode of the fuel rods (24), the first power (P1) is greater than the second power (P2), and when the nuclear reactor (1) is in a thermomechanical reconditioning mode of the fuel rods (24), the first power (P1) is less than the second power (P2), wherein
in the thermomechanical deconditioning mode of the fuel rods (24), the first power (P1) is substantially equal to the rated power (PN) of the nuclear reactor (1), and the second power (P2) is substantially equal to a target power for a sustained operation at intermediate power of the nuclear reactor (1),
in the thermomechanical reconditioning mode of the fuel rods (24), the first power (P1) is equal to a target power for a sustained operation at intermediate power of the nuclear reactor (1), and the second power (P2) preferably being substantially equal to the rated power (PN) of the nuclear reactor (1).
